# FASCICULE DE BREVET EUROPEEN

(11) **EP 0 699 393 B1**
(45) Date de publication et mention de la délivrance du brevet: **02.12.1998**
(21) Numéro de dépôt: 94113824.0
(22) Date de dépôt: 03.09.1994
(51) Int. Cl.: A23F 3/18, A23F 3/20

(54) **Procédé de préparation de thé noir instantané**
Verfahren zur Herstellung von schwarzem Instant-Tee
Process for preparing instant black tea

(43) Date de publication de la demande: 06.03.1996
(73) Titulaire: SOCIETE DES PRODUITS NESTLE S.A., 1800 Vevey (CH)
(72) Inventeur: Lunder, Tito Livio, CH-1110 Morges (CH)
(74) Mandataire: Thomas, Alain

(56) Documents cités:
- EP-A- 0 067 351
- EP-A- 0 110 391
- EP-A- 0 198 209
- EP-A- 0 201 000
- US-A- 3 669 680

## Description

L'invention concerne un procédé de préparation de thé noir instantané soluble dans l'eau froide, dans lequel on soumet les feuilles de thé noir à une extraction avec de l'eau chaude à une température comprise entre 60 et 130 °C, on sépare les feuilles de thé, on concentre ce premier extrait à une teneur en matières solides comprise entre 5 et 12 % et on refroidit à une température comprise entre 5 et 15 °C pour former une crème insoluble qui est séparée du premier extrait concentré soit par filtration, soit par centrifugation.

Il est connu que les extraits à base de thé noir et notamment le thé noir instantané donne une boisson trouble à la température ambiante. Cette turbidité est provoquée par un précipité d'un complexe entre la caféine et des polyphénols, qui est désignée sous le nom de " crème de thé". Cette crème de thé est insoluble dans l'eau froide et un certain traitement supplémentaire du thé noir extrait est habitellement nécessaire pour parvenir à une solubilité dans l'eau froide : mais dans ce cas, on rejette la crème de thé. On connait maintenant des procédés d'extraction de thé noir qui permettent de récupérer la crème de thé au moins partiellement.

Le brevet EP 198209 concerne déjà un procédé de préparation de thé noir instantané soluble dans l'eau froide, dans lequel on opère comme mentionné dans le paragraphe précédent et on soumet la crème de thé à une extraction avec de l'eau, ce qui donne un second extrait qui est séparé de la crème de thé restante et on mélange le premier et le second extraits qu'on deshydrate.

L'inconvénient de ce procédé est que lorsque sur le premier extrait on effectue une concentration et on refroidit, il y a des substances qui ne font pas partie de la crème de thé qui co-précipitent. Et dans l'extraction subséquente de ladite crème de thé, ce sont surtout les substances ne faisant pas partie de la crème de thé qui sont récupérées : le résultat est qu'en fin de compte on ne récupère qu'une faible partie de ce qu'on appelle la crème de thé.

Le brevet EP0201000 concerne aussi un procédé de préparation de thé noir instantané, dans lequel on récupère la crème de thé. Le problème de ce procédé est qu'il est coûteux, car il nécessite un premier séchage pour récupérer des catéchines en poudre à partir de thé vert, qu'on utilise ensuite dans l'extrait de thé noir refroidi pour solubiliser la crème de thé et qu'on soumet alors à un second séchage pour obtenir la poudre de thé finale.

Le but de la présente invention est de mettre au point un procédé ,dans lequel on récupère effectivement la crème de thé de manière simple sans renchérir le coût d'extraction.

L'invention concerne un procédé de préparation de thé noir instantané soluble dans l'eau froide, dans lequel on opère selon le préambule de la revendication 1 et on mélange la crème de thé séparée du premier extrait avec les feuilles de thé noir épuisées ou avec des feuilles de thé vert , on extrait le mélange avec de l'eau à une température supérieure à 70 °C pour obtenir un second extrait qui est séparé des feuilles épuisées, on sépare la crème de thé résiduelle par filtration ou centrifugation, on mélange le premier et le second extrait, on concentre à la teneur souhaitée en matières solides et on sèche.

Sans vouloir être lié par une théorie scientifique, il est possible selon le procédé de l'invention de récupérer toute la crème, car dans les feuilles de thé noir épuisées et dans les feuilles de thé vert, il y a des fibres qui décomplexent la caféine, qui est un des constituants de la crème de thé. Cette décomplexation permet l'obtention d'une poudre soluble dans l'eau froide. Il n'y a donc pas de perte de solides. Au contraire, le fait de chauffer la crème de thé avec les feuilles permet de récupérer encore quelques solides en augmentant de cette façon le rendement.

Dans la présente description, par thé noir on entend le produit de l'oxydation enzymatique du thé vert. Par thé vert, on entend la matière obtenue à partir de l'arbre à thé Camellia sinensis. Il doit être entendu que le thé vert n'a subi pratiquement aucune fermentation le transformant en thé noir.

La quantité d'eau utilisée pour chaque extraction est comprise entre 2 et 25 parties en poids d'eau, par partie de thé sec, de préférence de 4 à 15 parties et plus particulièrement entre 5 et 12 parties. La durée de la première extraction peut aller jusqu'à 30 minutes, de préférence entre 2 et 15 minutes et plus particulièrement entre 5 et 12 minutes.

La température de l'eau utilisée pour la première extraction est comprise entre 60 et 125°C, de préférence entre 75 et 110 °C et plus particulièrement entre 85 et 105°C.

Le premier extrait est concentré sous pression réduite, de préférence pour arriver à une teneur en matière sèche comprise entre 6 et 11% et plus particulièrement entre 7 et 9%. Après concentration, le premier extrait est refroidi pour que la crème de thé précipite : on refroidit de préférence entre 7 et 12°C, plus particulièrement entre 9 et 11°C.

La crème de thé est séparée avant d'être mélangée avec les feuilles de thé. Cette séparation se fait soit par filtration, soit par centrifugation. Le mélange de crème de thé et de feuilles de thé noir épuisées ou de feuilles de thé vert est mis sous reflux avec la même quantité d'eau que mentionnée ci-dessus pendant une durée comprise entre 60 et 100 minutes, de préférence entre 70 et 90 minutes, à une température comprise entre 70 et 95°C. On sépare finalement la crème de thé résiduelle comme précédemment par filtration ou centrifugation.

Si dans la seconde extraction, on utilise de feuilles de thé vert, on les utilise en une quantité comprise entre le tiers et le cinquième de celle de feuilles de thé noir du départ.

La première extraction se fait soit par percolation, soit à contre-courant tandis que le seconde extraction se fait plutôt par percolation. L'extraction par percolation se fait de préférence sous agitation dans un récipient contenant l'eau, les feuilles épuisées et la crème.

Le premier et le second extraits sont ensuite mélangés et les extraits sont concentrés à la teneur souhaitée en matières solides, de manière à arriver sur le système de séchage avec une teneur en matière sèche plus élevée : il est prévu de concentrer jusqu'à une teneur en matières solides comprise entre 15 et 25% en poids.

Le séchage de l'extrait concentré peut être effectué soit par pulvérisation ,soit par lyophilisation.

Le procédé selon l'invention peut être mis en oeuvre sur tous les types de thé noir et sur leurs mélanges.

Le thé instantané obtenu selon le procédé de l'invention est naturel à 100%, est soluble dans l'eau froide, peut être glacé, conduit à une boisson stable ayant des propriétés organoleptiques excellentes, notamment l'astringence requise.

La suite de la description est faite en référence aux exemples.

### Exemple 1.

100 g de feuilles de thé noir moulues pour augmenter leur surface d'extraction sont mises sous percolation dans un creuset en verre fritté avec 2000 ml d'eau chauffée à 95°C. L'eau est recyclée à travers le lit de feuilles jusqu'à ce que l'extrait présente un degré Brix constant.

Ce premier extrait est concentré jusqu'à environ 8°Brix, refroidi dans de la glace ou dans le réfrigérateur jusqu'à 10°C. Il est ensuite centrifugé et le surnageant constitue le premier extrait concentré.

Le résidu formé par la crème de thé et les feuilles épuisées est mis en suspension dans l'eau, versé dans un récipient où le reste des feuilles épuisées est ajouté. On rajoute de l'eau pour arriver à un rapport eau : résidu de 20 :1. On dispose d'un condenseur et le mélange est mis sous reflux pendant 90 minutes pour donner l'extrait 2.

Les feuilles sont séparées, l'extrait 2 est clarifié et mélangé avec le premier extrait. On concentre alors ce mélange à une teneur en matières sèches de 25% et on fait un séchage par pulvérisation pour obtenir une poudre soluble dans l'eau froide.

La boisson reconstituée est mise au réfrigérateur et ne présente aucune turbidité ou précipité à 5°C.

### Exemple 2.

100 g de feuilles de thé noir moulues pour augmenter leur surface d'extraction sont mises sous percolation dans un creuset de verre fritté avec 2000 ml d'eau chauffée à 95°C.

L'eau est recyclée à travers le lit de feuilles jusqu'à ce que l'extrait présente un degré Brix constant. Ce premier extrait est concentré jusqu'à environ 8° Brix, refroidi dans de la glace ou dans le réfrigérateur à 10°C. Il est ensuite centrifugé et le surnageant constitue le premier extrait.

Le résidu formé par la crème de thé est mis en suspension dans l'eau et versé dans un récipient contenant 30 g de feuilles de thé vert.On rajoute de l'eau pour arriver à un rapport eau : résidu de 20 : 1. On dispose d'un condenseur et le mélange est mis sous reflux pendant 90 minutes pour donner l'extrait 2.

Les feuilles sont séparées, l'extrait 2 est clarifié et mélangé avec le premier extrait. On concentre alors ce mélange à une teneur en matières sèches de 25% et on fait un séchage par pulvérisation pour obtenir une poudre soluble dans l'eau froide.

Si on conserve le mélange d'extrait 1 et 2 sous forme liquide et qu'on le congèle, ledit mélange conserve toute sa limpidité.

Le procédé selon l'invention permet de préparer une poudre instantanée dans laquelle on a récupéré une grande partie de la crème de thé sans occasionner pour autant de turbidité dans la boisson reconstituée.

## Revendications

1. Procédé de préparation de thé noir instantané soluble dans l'eau froide, dans lequel on soumet les feuilles de thé noir à une extraction avec de l'eau chaude à une température comprise entre 60 et 130 °C, on sépare les feuilles de thé, on concentre ce premier extrait à une teneur en matières solides comprise entre 5 et 12 %_{,,} on refroidit à une température comprise entre 5 et 15 °C pour former une crème insoluble qui est séparée du premier extrait concentré soit par filtration, soit par centrifugation,caractérisé en ce qu'on mélange cette crème de thé avec les feuilles de thé noir épuisées ou avec des feuilles de thé vert, on extrait le mélange avec de l'eau à une température supérieure à 70°C pour obtenir un second extrait qui est séparé des feuilles épuisées, on sépare la crème de thé résiduelle par filtration ou centrifugation, on mélange le premier et le second extrait, on concentre à la teneur souhaitée en matières solides et on sèche.

2. Procédé selon la revendication 1, caractérisé en ce que l'extraction pour obtenir le second extrait est effectuée à une température comprise entre 70 et 95°C.

3. Procédé selon la revendication 2, caractérisé en ce que la seconde extraction est faite en une durée comprise entre 60 et 100 minutes.

4. Procédé selon l'une des revendications 1 à 3, caractérisé en ce que dans la seconde extraction on utilise une quantité de feuilles de thé vert comprise entre le tiers et le cinquième de celle de feuilles de thé noir du départ.

## Claims

1. Process for preparing instant cold-water soluble black tea, wherein the leaves of black tea are subjected to an extraction with hot water at a temperature of between 60 and 130°C, the tea leaves are separated, this first extract is concentrated to a dry solids content of between 5 and 12 % and is cooled to a temperature of between 5 and 15°C so as to form an insoluble cream which is separated from the first concentrated extract either by filtration or by centrifuging, characterized in that this tea cream is mixed with the spent black tea leaves or with green tea leaves, the mixture is extracted with water at a temperature above 70°C to obtain a second extract which is separated from the spent leaves, the residual tea cream is separated by filtration or centrifuging, and the first and second extracts are mixed, concentrated to the desired solids content and dried.

2. Process according to claim 1, characterized in that the extraction in order to prepare the second extract is performed at a temperature of between 70 and 95°C.

3. Process according to claim 2, characterized in that the second extraction is carried out for a period of between 60 and 100 minutes

4. Process according to one of claims 1 to 3, characterized in that in the second extraction a quantity of green tea leaves is used of between a third and a fifth of that of the starting black tea leaves.

## Patentansprüche

1. Verfahren zur Herstellung eines kaltwasserlöslichen schwarzen Instanttees, bei dem man die Blätter eines schwarzen Tees einer Extraktion mit heißem Wasser einer Temperatur im Bereich von 60 bis 130°C unterwirft, die Teeblätter abtrennt, den ersten Extrakt auf einen Feststoffgehalt im Bereich von 5 bis 12% konzentriert, auf eine Temperatur im Bereich im Bereich von 5 bis 15°C abkühlt, um eine unlösliche Haut zu bilden, die von dem ersten konzentrierten Extrakt durch Filtration oder duch Zentrifugieren abgetrennt wird, dadurch gekennzeichnet, daß man diese Teehaut mit ausgelaugten Blättern eines schwarzen Tees oder mit Blättern eines grünen Tees mischt, die Mischung mit Wasser einer Temperatur von mehr als 70°C extrahiert, um einen zweiten Extrakt zu erhalten, der von den ausgelaugten Blättern abgetrennt wird, man die restliche Teehaut durch Filtration oder Zentrifugieren abtrennt, den ersten und den zweiten Extrakt mischt und bis zu einem gewünschten Feststoffgehalt konzentriert und trocknet.

2. Verfahren nach Anspruch 1, dadurch gekennzeichnet, daß die Extraktion zur Gewinnung des zweiten Extrakts bei einer Temperatur im Bereich von 70 bis 95°C durchgeführt wird.

3. Verfahren nach Anspruch 2, dadurch gekennzeichnet, daß die zweite Extraktion für einen Zeitraum im Bereich von 60 bis 100 min erfolgt.

4. Verfahren nach einem der Ansprüche 1 bis 3, dadurch gekennzeichnet, daß man bei der zweiten Extraktion eine Menge an Blättern eines grünen Tees verwendet, die im Bereich von einem Drittel bis zu einem Fünftel derjenigen der Blätter des schwarzen Tees vom Anfang liegt.
